# EUROPEAN PATENT APPLICATION

(11) **EP 2 258 664 A1**
(43) Date of publication of application: **08.12.2010**
(21) Application number: 09305513.5
(22) Date of filing: 04.06.2009
(51) Int. Cl.: C03B 13/08, C03B 17/06

(54) **Vertical rolling apparatus and method for producing a textured glass sheet**

(71) Applicant: Corning Incorporated, Corning NY 14831 (US)
(72) Inventor: Fredholm, Allan Mark, 77850, Hericy (FR); Gille, Claude, 77570, Bougligny (FR); Guillard, Vincent, 77300, Fontainebleau (FR)
(74) Representative: Le Roux, Martine

(57) **Abstract**

A glass manufacturing system (100) and method are described herein that use a vertical glass delivery device (102) and a vertical roll apparatus (104) to manufacture a textured glass sheet (106). In one embodiment, the textured glass sheet (106) has a thickness in the range of about 0.5-3.0 mm.

## Description

### TECHNICAL FIELD

The present invention relates in general to a glass manufacturing system and a method for using a vertical glass delivery device and a vertical roll apparatus to manufacture a textured glass sheet. In one embodiment, the textured glass sheet has a thickness in the range of about 0.5-3.0 mm

### BACKGROUND

Glass sheet forming processes have been developed throughout the 20^{th} century based on different process ideas. For instance, glass rolling is one of the first industrial processes used to form a glass sheet as discussed in U.S. Patents Nos. 2,387,886 and 2,478,090. Later in history, the float process was invented and developed to form a glass sheet as described in an article by L.A.B. Pilkington "The Float Glass Process", Proc. Roy. Soc. Lond., Vol. 314, pp 1-25 (16 December 1969). The float process is used to make glass sheets, commonly used for architectural and automotive purposes, which have pristine surfaces without having to polish the glass surfaces. At the same time, another process known as the fusion draw process was invented and developed to form a glass sheet which has extremely pristine surfaces as described in U.S. Patent Nos. 3,338,696, 3,537,834 and 3,682,609 (the contents of which are incorporated herein by reference).

Recently, there has been an increasing interest for glass sheets that do not have pristine surfaces but instead have textured glass surfaces. This is especially true for photovoltaic applications, where a textured glass sheet is a potential lever to increase the efficiency and optical properties of photovoltaic devices. In a similar way, textured glass sheets could be used to help optimize light extraction for organic light emitting diode (OLED) lighting devices.

One can readily understand that the float process and the fusion draw process, which produce glass sheets with different levels of pristine surfaces, cannot at the same time be expected to be able to produce textured surfaces. However, it has been known to use a horizontal rolling set up together with a textured roll to produce textured glass sheets as described in U.S. Patent No. 3,554,725. The horizontal rolling set up together with the textured roll however cannot produce thin textured glass sheets. Basically, horizontal textured rolling is only possible when there is some significant amount of glass in a central part of the glass sheet being formed that has a sufficiently low viscosity to allow viscous deformation when interfacing with the textured roll. This means that the horizontal textured rolling set up can be used to produce a textured glass sheet that has a minimum thickness of about 2.5-3.0 mm. However, it would be desirable to be able to manufacture a textured glass sheet in a manner other than the known horizontal textured rolling set up. This need and other needs are satisfied by the present invention.

### SUMMARY

In one aspect, the present invention provides a glass manufacturing system for manufacturing a textured glass sheet. In one embodiment, the glass manufacturing system includes at least one vessel adapted to provide a molten glass and a vertical glass delivery device adapted to receive the molten glass. The vertical glass delivery device includes a slot orifice through which the molten glass transitions to a substantially vertical free falling molten glass stream. In addition, the glass manufacturing system includes a vertical roll apparatus which has a pair of rolling rolls where at least one of the rolling rolls is a textured rolling roll. The pair of rolling rolls are adapted to receive there between the molten glass stream free falling in a substantially vertical direction downward from the vertical glass delivery device. The pair of rolling rolls are also adapted to roll the molten glass stream and at same time pattern at least one side of the molten glass stream to form the textured glass sheet. In one example, the vertical roll apparatus also includes a pair of forming rolls located above the pair of rolling rolls.

In another aspect, the present invention provides a method for manufacturing a textured glass sheet where the method includes the steps of: (a) forming a molten glass; (b) delivering the molten glass to a vertical glass delivery device that has a slot orifice through which the molten glass transitions to a vertical free falling molten glass stream; and (c) delivering the vertical free falling molten glass stream to a vertical roll apparatus which includes a pair of rolling rolls where at least one of the rolling rolls is a textured rolling roll. The delivering step further includes the steps of: (i) rolling the molten glass stream between the rolling rolls; and (ii) patterning at least one side of the molten glass stream while rolling the molten glass stream between the rolling rolls to form the textured glass sheet. In one example, the vertical roll apparatus also includes a pair of forming rolls located above the pair of rolling rolls.

In still yet another aspect, the present invention provides a vertical roll apparatus located below a vertical glass delivery device which provides a vertical free falling molten glass stream. The vertical roll apparatus includes a pair of rolling rolls where at least one of the rolling rolls is a textured rolling roll. The rolling rolls are adapted to receive the molten glass stream there between while the molten glass stream is viscous and moving in a substantially vertical direction downward from the vertical glass delivery device. In addition, the rolling rolls are adapted to roll the molten glass stream and at the same time pattern at least one side of the molten glass stream to form a textured glass sheet. In one example, the vertical roll apparatus also includes a pair of forming rolls located above the pair of rolling rolls.

Additional aspects of the invention will be set forth, in part, in the detailed description, figures and any claims which follow, and in part will be derived from the detailed description, or can be learned by practice of the invention. It is to be understood that both the foregoing general description and the following detailed description are exemplary and explanatory only and are not restrictive of the invention as disclosed.

### BRIEF DESCRIPTION OF THE DRAWINGS

A more complete understanding of the present invention may be had by reference to the following detailed description when taken in conjunction with the accompanying drawings wherein:

FIGURES 1A-1B are a front view and a side view illustrating a glass manufacturing system which uses a vertical glass delivery device and a vertical roll apparatus to manufacture a textured glass sheet in accordance with an embodiment of the present invention;

FIGURE 2 is a perspective view of an exemplary textured rolling roll used in the vertical roll apparatus shown in FIGURE 1;

FIGURES 3A-3C are various diagrams illustrating an exemplary groove pattern that can be present on the textured rolling roll shown in FIGURE 2;

FIGURES 4A-4B are various diagrams illustrating an exemplary knurl pattern that can be present on the textured rolling roll shown in FIGURE 2;

FIGURE 5A-5B are various diagrams illustrating an exemplary random roughness pattern that can be present on the textured rolling roll shown in FIGURE 2; and

FIGURES 6A-6B are a front view and a side view illustrating an alternative glass manufacturing system which uses a vertical glass delivery device and an alternative vertical roll apparatus to manufacture a textured glass sheet in accordance with an embodiment of the present invention.

### DETAILED DESCRIPTION

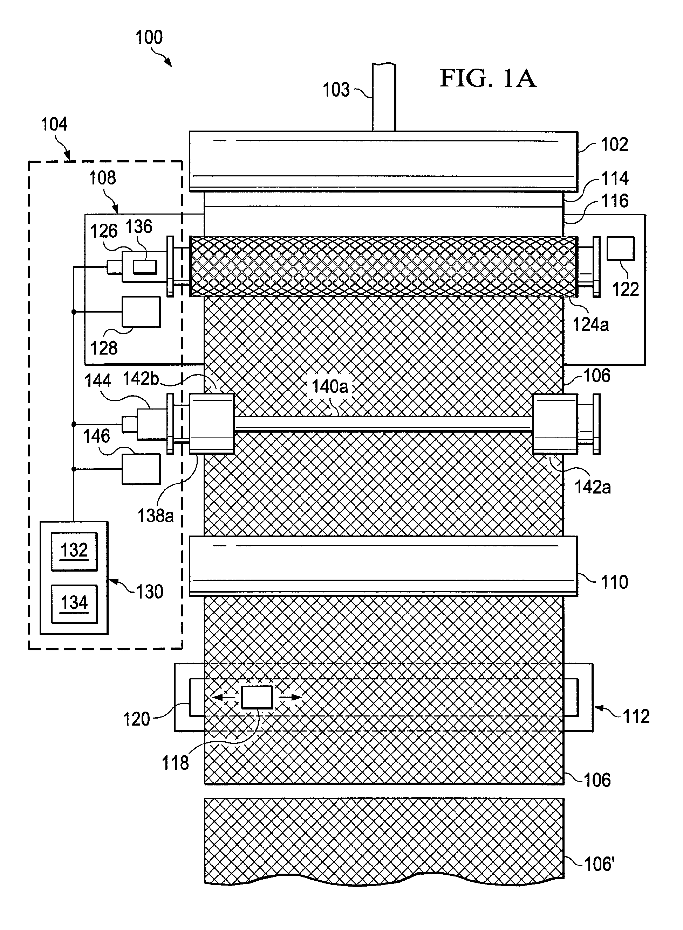

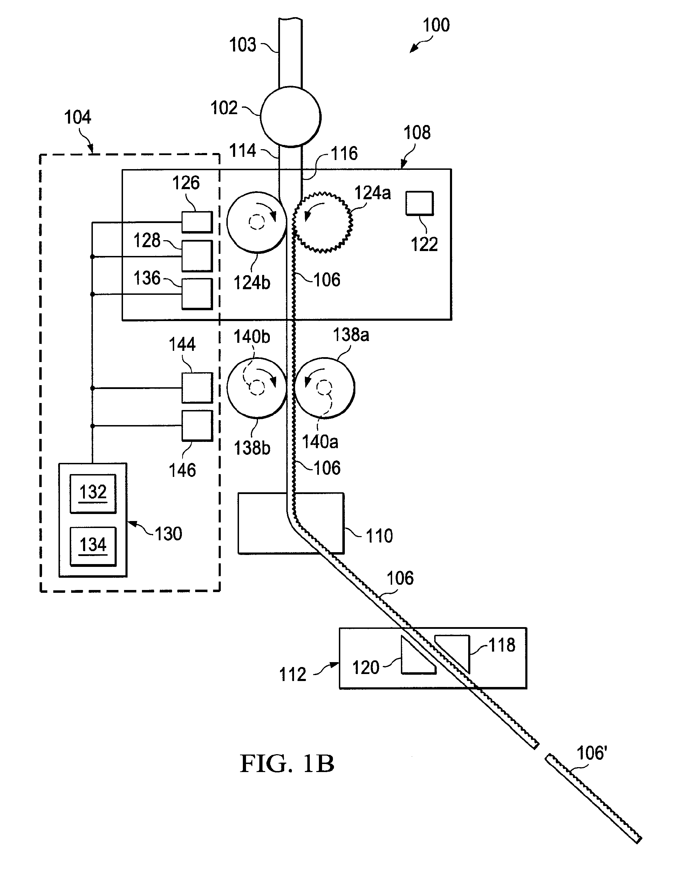

Referring to FIGURES 1A-1B, there are shown schematic views of an exemplary glass manufacturing system 100 that uses a vertical glass delivery device 102 and a vertical roll apparatus 104 to manufacture a textured glass sheet 106 in accordance with an embodiment of the present invention. As shown, the exemplary glass manufacturing system 100 includes a vertical downcomer 103, the vertical glass delivery device 102, a temperature controlled environment 108, the vertical roll apparatus 104, a glass bending device 110, and a glass sheet separation device 112.

In this example, the vertical downcomer 103 is adapted to receive and allow molten glass to flow into the vertical glass delivery device 102. The vertical glass delivery device 102 has a slot orifice 114 through which the molten glass flows and transitions to a substantially vertical free falling molten glass stream 116. The molten glass stream 116 is subsequently drawn downward and textured by the vertical roll assembly 104 to form the textured glass sheet 106. The temperature controlled environment 108 (optional) can be used to gradually cool the molten glass stream 116 and the textured glass sheet 106. The glass bending device 110 (optional) can be used to bend the textured glass sheet while still in a viscous regime to travel in an inclined direction (shown) or a horizontal direction (not shown). Then, the glass sheet separation device 112 (optional) may include a mechanical scoring device 118 (e.g., scoring wheel 118) and a nosing device 120 which are used to mechanically score the textured glass sheet 106 so it can be separated into distinct pieces of textured glass sheets 106'. A detailed discussion is provided next about the exemplary vertical delivery device 102, the exemplary temperature control environment 108 and the exemplary vertical roll apparatus 104.

As can be seen in FIGURE 1A, the vertical glass delivery device 102 has a slot orifice 114 which has a width slightly smaller than the desired width of the textured glass sheet 106 to be produced. Basically, the molten glass flows through the slot orifice 114 to form the substantially vertical free falling molten glass stream 116. The molten glass stream 116 leaves the slot orifice 114 traveling downward in a substantially vertical direction while in a viscous regime with a viscosity range of about 150 to 50,000 poise, and preferably between 250 to 25,000 poise.

The closed (or "thermally protected") temperature control environment 108 if used would be located below the slot orifice 114 and would function to gradually cool in a controlled manner the molten glass stream 116 and the subsequent textured glass sheet 106 to avoid excessive stresses from developing in the textured glass sheet 106. The temperature control environment 108 can have one or more devices 122 that control the cooling rate of the molten glass stream 116 and the textured glass sheet 106 by using forced convection, cooling through exposure to water cooled elements such as hollow stainless steel tubes, arrays of heating elements etc. For example, the temperature controlled environment 108 can be made by enclosing at least a section of the process and using: (1) thermal insulation to limit cooling from outside the manufacturing process; (2) active cooling such as forced air, or radiative heat sinks such as water cooled devices etc.; and/or (3) active heating such as electric heating that is applied through windings of heated tubes etc.

At a small distance below the slot orifice 114, the vertical roll apparatus 104 has a pair of rolling rolls 124a and 124b which function to receive the molten glass stream 116 there between and then roll the molten glass stream 116 and at the same time pattern at least one side of the molten glass stream 116 to form the textured glass sheet 106. The molten glass stream 116 does not flow on top of any of the rolling rolls 124a and 124b. The rolling rolls 124a and 124b are connected to one or more suitable mechanical device(s) 126 (e.g., drive controller(s), motor(s)) that enable the rotational movements of the rolling rolls 124a and 124b. The speed of the rolling rolls 124a and 124b can be adjusted to match the downward flow of the molten glass stream 116 provided by the slot orifice 114. In addition, the rolling rolls 124a and 124b are connected to one or more suitable mechanical device(s) 128 (e.g., air cylinder(s)) that apply a horizontal force between the rolling rolls 124a and 124b which enable the application of a horizontal force on the molten glass stream 116. The horizontal force, or the mechanical stop position of the rolling rolls 124a and 124b, is set to roll the molten glass stream 116 to the desired thickness, typically in the range of about 1.0-3.0 mm. It should be noted that for clarity the brackets and supports which support the rolling rolls 124a and 124b and the various mechanical devices 126 and 128 have not been shown.

In one example, the vertical roll apparatus 104 includes a control device 130 which has one or more processors 132 and at least one memory 134 (storage 134) that includes processor-executable instructions where the one or more processors 132 are adapted to interface with the memory 134 and execute the processor-executable instructions to control the mechanical device(s) 126 to rotate the rolling rolls 124a and 124b at a desired speed and to control the mechanical device(s) 128 to open-close the rolling rolls 124a and 124b to apply a desired horizontal force to the molten glass stream 116. The one or more processors 132 and the at least one memory 134 can be implemented, at least partially, as software, firmware, hardware, or hard-coded logic. In particular, the control device 130 can interface with the mechanical device(s) 126 (e.g., drive controller(s), motor(s)) to control speed at which the molten glass stream 116 is drawn, the torque at which the molten glass stream 116 is drawn, or a combination of both speed and torque that the molten glass stream 116 is drawn to obtain the textured glass sheet 106. The rolling rolls 124a and 124b are located within the temperature controlled environment 108.

To produce a textured surface on one or more sides of the molten glass stream 116, one or both of the rolling rolls 124a and 124b has a textured surface. In this example, the rolling roll 124a has a textured surface while the rolling roll 124b has a smooth surface. Alternatively, the rolling roll 124a can have a smooth surface while the rolling roll 124b has a textured surface. In another alternative, the rolling roll 124a can have one type of a textured surface while the rolling roll 124b can have a different type of a textured surface. Lastly, the rolling rolls 124a and 124b can each have the same textured surface or they each can have any type of combination of a smooth surface and a textured surface. The rolling rolls 124a and 124b can be made from, for example, metallic alloys, ceramics, ceramic coated, or boron nitride. For instance, the rolling rolls 124a and 124b can have outside diameters in the range 7 cm to 32 cm. If desired, the vertical roll apparatus 104 may include a cooling mechanism 136 which functions to use air or a liquid to internally cool the rolling rolls 124a and 124b.

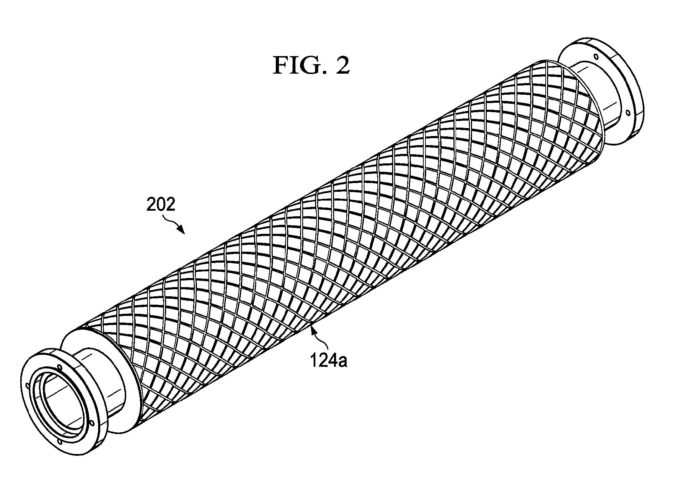

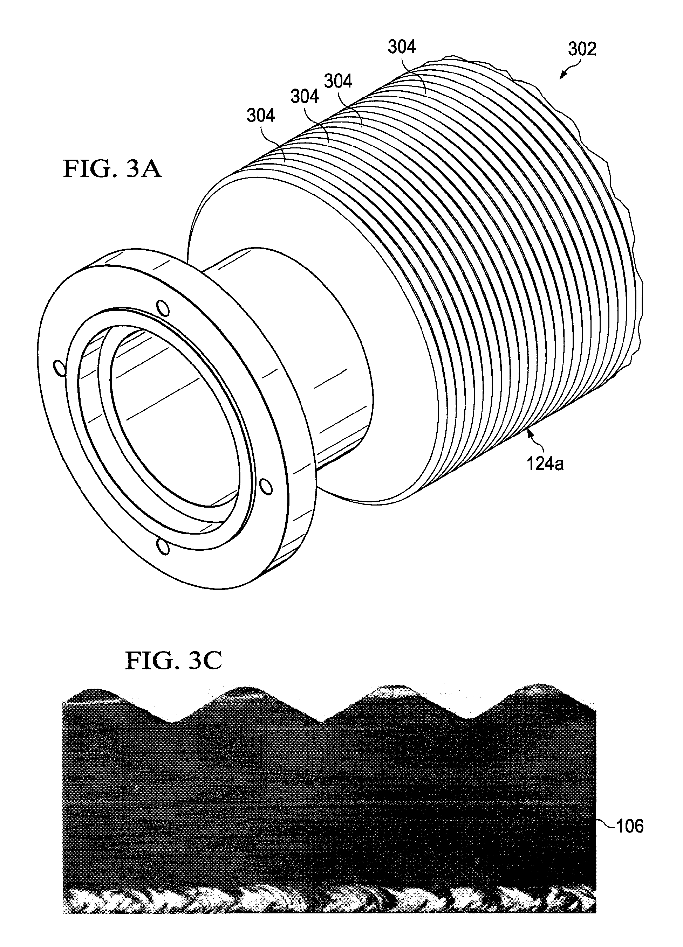

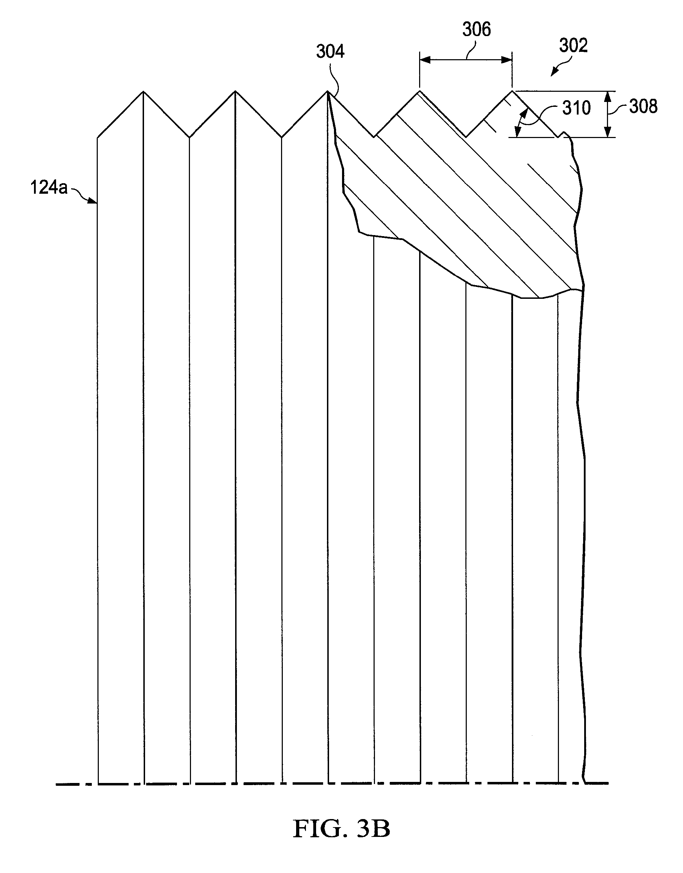

Referring to FIGURE 2, there is a perspective view of an exemplary rolling roll 124a which has a textured surface 202. The textured surface 202 can be anyone or any combination of a variety of patterns such as, for example, a repeating pattern that includes a groove pattern or a knurl pattern or a random pattern that includes a surface roughness. A detailed discussion about some of the possible exemplary textured surfaces 202 that can be formed on the textured rolling roll 124a is provided next with respect to FIGURES 3-5.

Referring to FIGURES 3A-3B, there are two diagrams illustrating a perspective view and a side view of an exemplary groove pattern 302 that can be formed on the rolling roll 124a. In this example, the groove pattern 302 is made by using a lathe to machine an array of grooves 304 which are parallel to each other around the circumference of rolling roll 124a. For instance, the grooves 304 could have a 1 mm pitch 306 between themselves, each groove 304 could have a height 308 of around 247µm (σ=17 µm), and each groove 304 could have a 26° (σ=3.0-3.1°) base angle 310. FIGURE 3C is a photo illustrating the resulting groove pattern on the textured glass sheet 106 where it can be seen that the molten glass stream 116 conformed to the groove pattern 302 on the rolling roll 124a. In this case, one surface of the molten glass stream 116 essentially conformed to the shape of the groove textured rolling roll 124a but some rounding of the sharp points-edges occurred in the textured glass sheet 106. Plus, as the textured glass sheet 106 exits the rolling rolls 124a and 124b it is likely to still be viscous but in a high viscosity state so as to be able maintain the dimensions and patterns created thereon by the rolling rolls 124a and 124b.

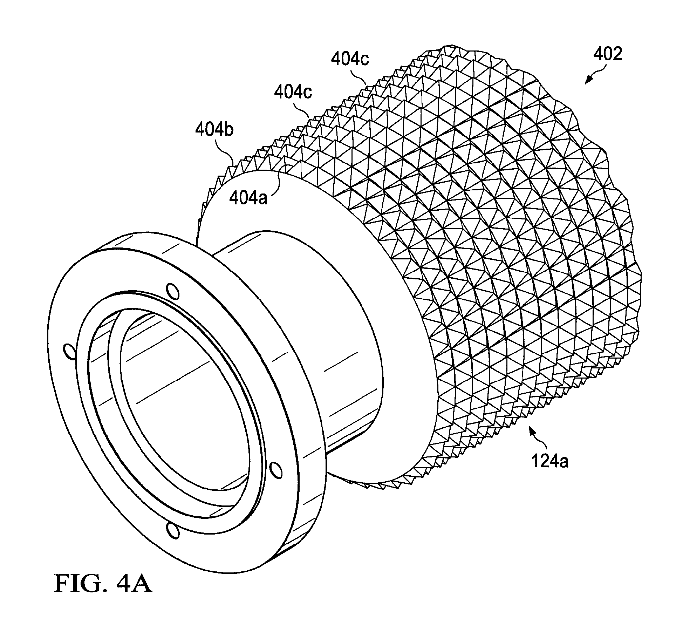

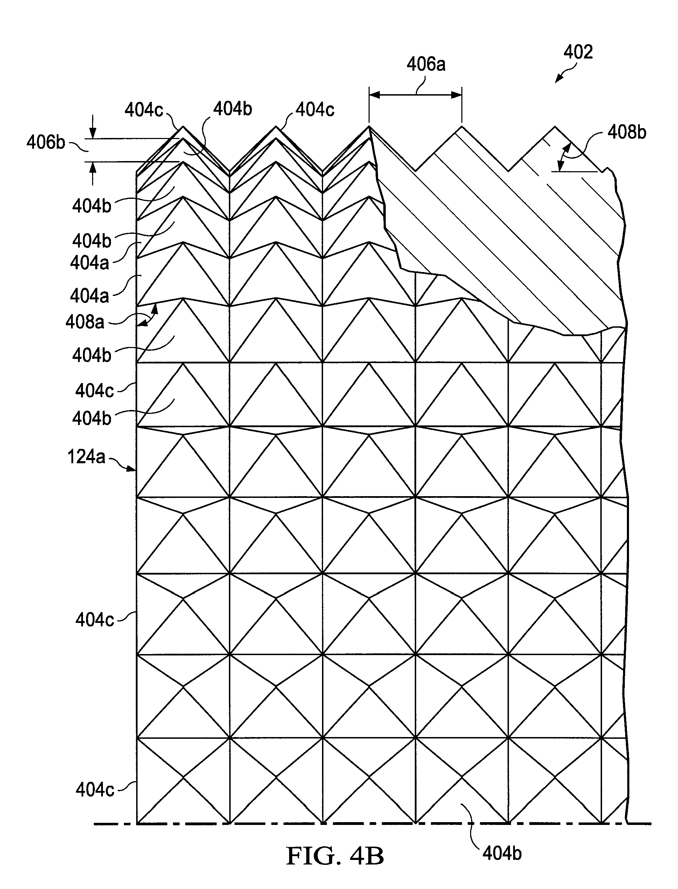

Referring to FIGURES 4A-4B, there are two diagrams illustrating a perspective view and a top view of an exemplary knurl pattern 402 that can be formed on the rolling roll 124a. In this example, the knurl pattern 402 is made by using a lathe to machine two arrays of grooves 404a and 404b perpendicular to each other where the first array of grooves 404a are parallel to each other around the circumference of rolling roll 124a and the second array of grooves 404b are parallel to each other in the direction of an axis of the rolling roll 124a where the resulting textured structures are shaped like pyramids 404c. For example, the grooves 404a and 404b could each have a 0.5-1.5 mm pitch 406a and 406b between themselves and each groove 404a and 404b could have a 30° base angle 408a and 408b. Upon rolling the molten glass stream 116, one surface of the molten glass stream 116 would essentially conform to the shape of the knurl textured rolling roll 124a but some rounding of the sharp points-edges can occur in the textured glass sheet 106. Plus, as the textured glass sheet 106 exits the rolling rolls 124a and 124b it is likely to still be viscous but in a high viscosity state so as to be able maintain the dimensions and patterns created thereon by the rolling rolls 124a and 124b.

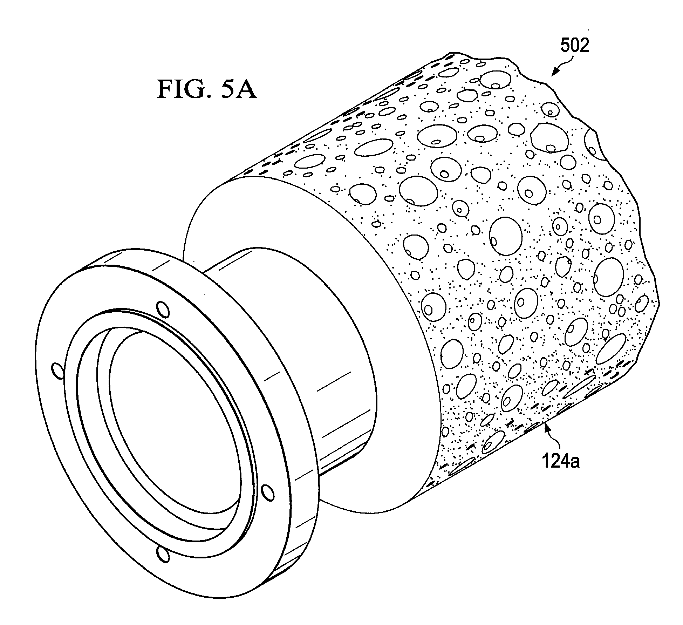

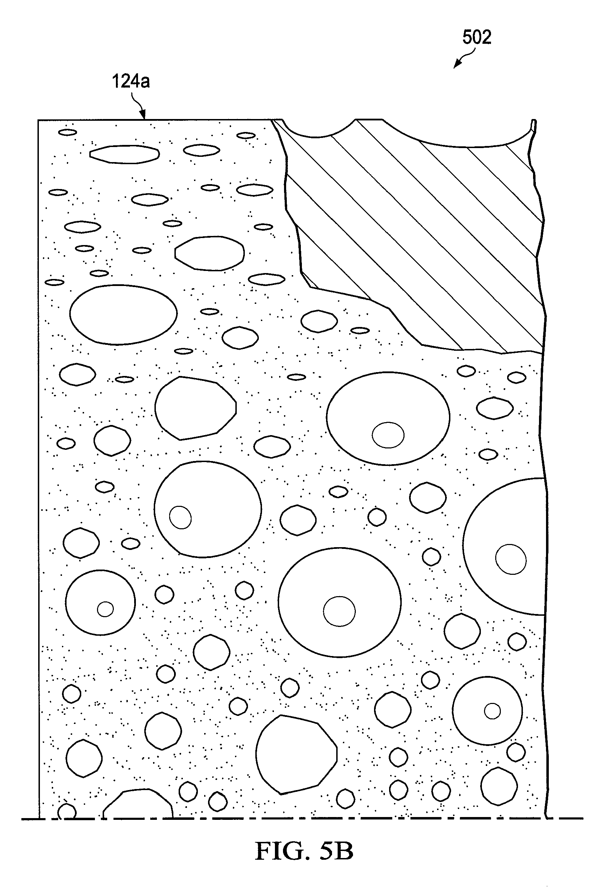

Referring to FIGURES 5A-5B, there are two diagrams illustrating a perspective view and a top view of an exemplary random roughness pattern 502 that can be formed on the rolling roll 124a. In this example, the random roughness pattern 502 is made by sand blasting at least a portion of the surface area of the rolling roll 124a. The random textured rolling roll 124a has a textured surface with a roughness that does not have a distinct pattern. Upon rolling the molten glass stream 116, one surface of the molten glass stream 116 would essentially conform to the shape of the random textured rolling roll 124a but some rounding of the sharp points-edges can occur in the textured glass sheet 106. Plus, as the textured glass sheet 106 exits the rolling rolls 124a and 124b it is likely to still be viscous but in a high viscosity state so as to be able maintain the dimensions and patterns created thereon by the rolling rolls 124a and 124b.

Referring back to FIGURES 1A-1B, the exemplary vertical roll apparatus 104 is shown as including a pair of pulling rolls 138a and 138b which are located below the rolling rolls 124a and 124b. In this example, the pulling rolls 138a and 138b extend across the width of the textured glass sheet 106 but have an undercut 140a and 140b formed therein so that the textured glass sheet 106 is contacted only near the two outer edges 142a and 142b. Thus, the pulling rolls 138a and 138b draw there between the first edge 142a and the opposing second edge 142b of the textured glass sheet 106. Alternatively, there could be four pulling rolls where two pulling rolls grab one outer edge 142a and the other two pulling rolls grab the other outer edge 142b. The pulling rolls 138a and 138b are shown located outside the temperature controlled environment 108 but they could be located within the temperature controlled environment 108.

The pulling rolls 138a and 138b are connected to one or more suitable mechanical device(s) 144 (e.g., drive controller(s), motor(s)) that enable the rotational movements of the pulling rolls 138a and 138b. In addition, the pulling rolls 138a and 138b could be connected to one or more suitable mechanical device(s) 146 (e.g., air cylinder(s)) that apply a horizontal force between the pulling rolls 138a and 138b which enable the application of a horizontal force on the edges 142a and 142b of the textured glass sheet 106. In fact, the control device 130 can control the mechanical device(s) 144 (e.g., drive controller(s), motor(s)) to rotate the pulling rolls 138a and 138b at a desired speed. Alternatively, the control device 130 could control the mechanical device(s) 144 (e.g., drive controller(s), motor(s)) to control the torque at which the textured glass sheet 106 is drawn, or to control a combination of both speed and torque that the textured glass sheet 106 is drawn. In addition, the control device 130 can control the mechanical device(s) 146 (e.g., air cylinder(s)) to open-close the pulling rolls 138a and 138b to apply a desired horizontal force to the textured glass sheet 106. It should be noted that for clarity the brackets and supports which support the pulling rolls 138a and 138b and the various mechanical devices 144 and 146 have not been shown.

The control device 130 can be used to rotate the pulling rolls 138a and 138b at the same linear speed as the rolling rolls 124a and 124b, or just slightly higher, to insure tensioning of the textured glass sheet 106. Alternatively, the control device 130 can control the pulling rolls 138a and 138b to rotate at a linear speed faster than the rolling rolls 124a and 124b to deliberately stretch and reduce the thickness of the textured glass sheet 106. The thickness of the textured glass sheet 106 can thereby be reduced to produce thinner sheets, in particular below 1 mm. In this case, the texture applied to either or both of the rolling rolls 124a and 124b would be designed to take into account the deformation of the texture that is rolled on the molten glass stream 116 during the further stretching caused by the pulling stage.

In any case, the textured glass sheet 106 after passing the pulling roll stage can be manipulated in various ways and in different directions (horizontal, inclined) using the glass bending device 110 (e.g., thermal devices and possibly mechanical (e.g. guidance) devices). Finally, the glass sheet separation device 112 which has the mechanical scoring device 118 (e.g., scoring wheel 118) and the nosing device 120 can be used to mechanically score the textured glass sheet 106 so it can then be separated into distinct pieces of textured glass sheets 106' (see FIGURES 1A-1B). Alternatively, individual textured glass sheets 106' can be cut from the continuous textured glass sheet 106 by using any sort of score and break device. The individual textured glass sheets 106' can be used in a wide-variety of devices including, for example, photovoltaic devices and organic light emitting diode (OLED) lighting devices. For instance, the textured glass sheet 106' which is less than 2mm thick (for example) can increase the optical properties and the overall efficiency through light trapping within the photovoltaic devices (or thin film photovoltaic modules). Plus, the textured glass sheets 106' which has a high refractive index such as n ≥ 1.65 (for example) can help light management by optimizing light extraction from the OLED lighting devices.

The glass manufacturing system 100 which utilizes at least the vertical rolling apparatus 104 can manufacture a textured glass sheet 106 that has a thickness in a range of about 0.5-3 mm. In particular, the glass manufacturing system 100 which utilizes at least the vertical rolling apparatus 104 can manufacture a textured glass sheet 106 that has, for example, a thickness less than 3.0 mm, less than 2.9 mm, less than 2.8 mm, less than 2.7 mm, less than 2.6 mm, less than 2.5 mm, less than 2.4 mm, less than 2.3 mm, less than 2.2 mm, less than 2.1 mm, less than 2.0 mm, less than 1.9 mm, less than 1.8 mm, less than 1.7 mm, less than 1.6 mm, less than 1.5 mm, less than 1.4 mm, less than 1.3 mm, less than 1.2 mm, less than 1.1 mm, less than 1.0 mm, less than 0.9 mm, less than 0.8 mm, less than 0.7 mm, less than 0.6 mm, less than 0.5 mm, less than 0.4 mm, less than 0.3 mm, less than 0.2 mm, or less than 0.1 mm. This thickness can be an average thickness taking into consideration the height and/or depth of the features in the textured glass sheet 106.

In a test, an experimental vertical glass delivery device 102 and an experimental vertical roll apparatus 104 where applied on a small width scale to manufacture a textured glass sheet 106 with a "unicrown" composition which is a white crown glass that has thermal properties similar to soda-lime glass. A molten glass stream 116 approximately 5 inches wide was provided by the slot orifice 114, where the molten glass stream 116 had a viscosity of about 900 poise upon leaving the slot orifice 114. The flow of the molten glass stream 116 was about 23 kg/hr. A pair of rolling rolls 124a and 124b, one had a groove textured pattern 302, was placed about 25 mm below the slot orifice 114. The rolling rolls 124a and 124b rolled and patterned the molten glass stream 116 at a linear speed of about 1 m/min. The textured glass sheet 106 that was manufactured had a width of about 90 mm and had a thickness between 1.5-1.9 mm (no attempt was made to manufacture a thinner textured glass sheet 106). The groove textured pattern 302 was readily formed in the textured glass sheet 106. If desired, the glass manufacturing system 100 can manufacture a wide variety of textured glass sheets 106 including, for example, a textured glass-ceramic sheet, a textured borosilicate glass sheet, a textured white crown glass sheet, a textured soda lime or a textured alkali-free glass sheet.

From the foregoing, one skilled in the art will appreciate that one embodiment of the present invention includes using a vertical (or close to vertical set up) glass delivery device (e.g., slot device) and placing a pair of rolling rolls beneath the vertical glass delivery device. At least one of the rolling rolls being textured with a pattern close to what is desired on the final textured glass sheet. In one example, the glass manufacturing system 100 uses the slot draw process where the vertically falling glass is shaped by rolling through the pair of rolling rolls 124a and 124b to obtain at least one textured surface. At this point the thickness of the textured glass sheet 106 may be in the range of about 1.0 mm. It is further possible by using an in line redraw (pulling rolls running at faster speed than the forming rolls) to reduce the thickness of the textured glass sheet 106 even more after the rolling step to the range of about 0.5 mm.

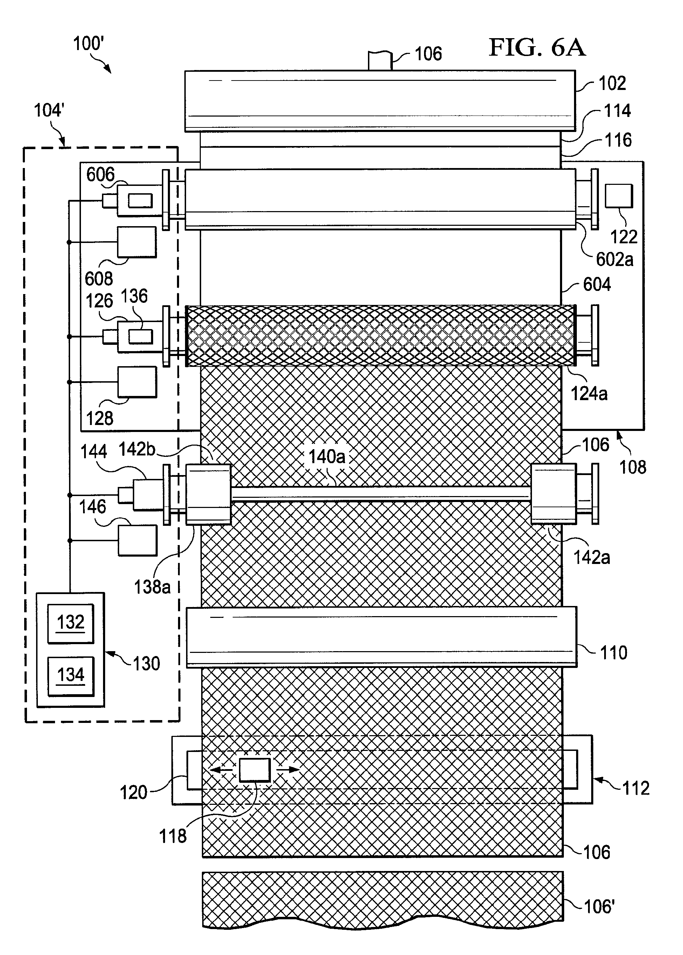

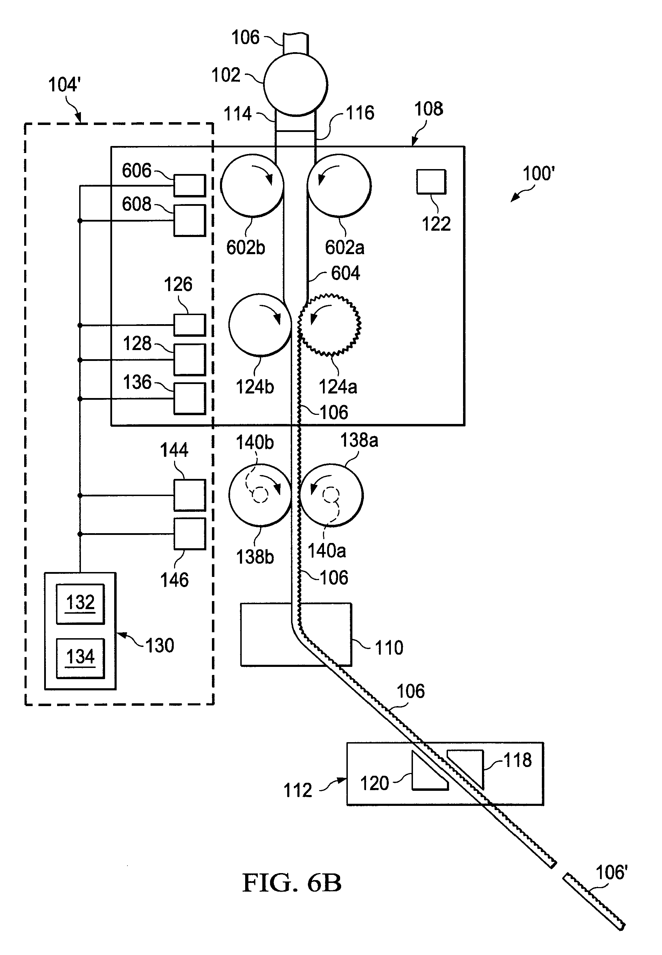

Referring to FIGURES 6A-6B, there are a front view and a side view illustrating an alternative glass manufacturing system 100' which uses a vertical glass delivery device 102 and an alternative vertical roll apparatus 104' to manufacture a textured glass sheet 106 in accordance with an embodiment of the present invention. The glass manufacturing system 100', the vertical glass delivery device 102 and the vertical roll apparatus 104' can include the aforementioned components 106, 108, 110, 112, 114, 116, 118, 120, 122, 124a, 124b, 126, 128, 130, 132, 134, 136, 138a, 138b, 140a, 140b, 142a, 142b, 144, and 146. However, the alternative vertical roll apparatus 104' also includes a pair of forming rolls 602a and 602b located above the pair of rolling rolls 124a and 124b. The forming rolls 602a and 602b both of which would usually be smooth can pre-shape the molten glass 116 while extracting a significant amount of heat there from to form a glass sheet 604. The glass sheet 604 would then be rolled and textured with a limited reduction in thickness by the rolling rolls 124a and 124b. In one example, the forming rolls 602a and 602b would be connected to one or more suitable mechanical device(s) 606 (e.g., drive controller(s), motor(s)) that enable the rotational movements of the forming rolls 602a and 602b. In addition, the forming rolls 124a and 124b are connected to one or more suitable mechanical device(s) 608 (e.g., air cylinder(s)) that apply a horizontal force between the forming rolls 602a and 602b which enable the application of a horizontal force on the molten glass stream 116. The control system 130 would control the operation of the mechanical devices 606 and 608. For instance, the vertical roll apparatus 104' may be used when running at a high throughput where the use of just one pair of rolling rolls 124a and 124b may lead to a textured glass sheet 106 which is still very soft, and thus difficult to remain in a flat, constant width and constant thickness state.

Although several embodiments of the present invention have been illustrated in the accompanying Drawings and described in the foregoing Detailed Description, it should be understood that the invention is not limited to the disclosed embodiments, but is capable of numerous rearrangements, modifications and substitutions without departing from the spirit of the invention as set forth and defined by the following claims.

## Claims

1. A glass manufacturing system (100) comprising:
at least one vessel (103) adapted to provide a molten glass;
a vertical glass delivery device (102) adapted to receive the molten glass from one of the at least one vessel (103), the vertical glass delivery device (102) including a slot orifice (114) through which the molten glass transitions to a substantially vertical free falling molten glass stream (116); and
a vertical roll apparatus (104) including a pair of rolling rolls (124a, 124b) where at least one of the rolling rolls (124a,124b) is a textured rolling roll, the pair of rolling rolls (124a,124b) adapted to receive there between the molten glass stream (116) free falling in a substantially vertical direction downward from the vertical glass delivery device (102) and then roll the molten glass stream (116) and at same time pattern at least one side of the molten glass stream (116) to form a textured glass sheet (106).

2. The glass manufacturing system of claim 1, wherein the vertical roll apparatus (104) further includes a control device (130) and at least one first mechanical device (126) adapted to rotate the rolling rolls (124a,124b) at a desired speed and at least one second mechanical device (128) adapted to open-close the rolling rolls (124a,124b) to apply a desired horizontal force to the molten glass stream (116).

3. The glass manufacturing system of claim 1 or 2, wherein the vertical roll apparatus (104) further includes a pair of pulling rolls (138a, 138b) adapted to draw there between a first edge (142a) and an opposing second edge (142b) of the textured glass sheet (106).

4. The glass manufacturing system of any one of claims 1 to 3, wherein the vertical roll apparatus (104) further includes a pair of forming rolls (602a, 602b) located above the rolling rolls (124a,124b).

5. The glass manufacturing system of any one of claims 1 to 4, further comprising a temperature controlled environment (108) adapted to cool the molten glass stream (116) and the textured glass sheet (106).

6. The glass manufacturing system of any one of claims 1 to 5, wherein the textured glass sheet (106) has a thickness between about 0.5-3.0 mm.

7. The glass manufacturing system of any one of claims 1 to 6, wherein the textured rolling roll (124a) is a groove patterned textured rolling roll, a knurl patterned textured rolling roll or a random rough textured rolling roll.

8. The glass manufacturing system of any one of claims 1 to 7, further comprising a glass bending device (110) adapted to bend the textured glass sheet (106) while still in a viscous regime to travel in an inclined or horizontal direction.

9. A method for manufacturing a textured glass sheet (106), said method comprising the steps of:
forming molten glass;
delivering the molten glass to a vertical glass delivery device (102) that has a slot orifice (114) through which the molten glass transitions to a vertical free falling molten glass stream (116); and
delivering the molten glass stream (116) which is in the vertical free fall flow to a vertical roll apparatus (104) that includes a pair of rolling rolls (124a, 124b) where at least one of the rolling rolls (124a,124b) is a textured rolling roll, wherein the delivering step further includes the steps of:
rolling the molten glass stream (116) between the rolling rolls (124a,124b); and
patterning at least one side of the molten glass stream (116) while rolling the molten glass stream (116) between the rolling rolls (124a,124b) to form the textured glass sheet (106).

10. The method of claim 9, further comprising a step of rotating the rolling rolls (124a,124b) at a desired speed and opening-closing the rolling rolls (124a,124b) to apply a desired horizontal force to the molten glass stream (116).

11. The method of claim 9 or 10, further comprising a step of delivering the textured glass sheet (116) to a pair of pulling rolls (138a, 138b) which draw there between a first edge (142a) and an opposing second edge (142b) of the textured glass sheet (106).

12. The method of any one of claims 9 to 11, wherein the vertical roll apparatus (104) further includes a pair of forming rolls (602a, 602b) located above the rolling rolls (124a,124b) and where the delivering step further including rolling the molten glass stream (116) between the forming rolls (602a,602b).

13. The method of any one of claims 9 to 12, further comprising a step of cooling the molten glass stream (116) and the textured glass sheet (106).

14. A photovoltaic device or an organic light emitting device comprising the textured glass sheet (106) made according to any one of claims 9 to 13.

15. A vertical roll apparatus (104) located below a vertical glass delivery device (102) with a slot orifice (114) through which there is provided a molten glass stream (116), the vertical roll apparatus (104) comprising:
a pair of rolling rolls (124a, 124b) where at least one of the rolling rolls (124a,124b) is a textured rolling roll (124a);
the pair of rolling rolls (124a,124b) adapted to receive the molten glass stream (116) there between while the molten glass stream (116) is viscous and moving in a substantially vertical direction downward from the vertical glass delivery device (102);
the pair of rolling rolls (124a,124b) are adapted to roll the molten glass stream (116); and
the pair of rolling rolls (124a,124b) are adapted to pattern at least one side of the molten glass stream (116) while rolling the molten glass stream (116) to form a textured glass sheet (106).
